Europäisches Patentamt

(19) European Patent Office

Office européen des brevets

(11) Veröffentlichungsnummer: **0 057 458**
**B1**

(12) **EUROPÄISCHE PATENTSCHRIFT**

(45) Veröffentlichungstag der Patentschrift:
**20.03.85**

(51) Int. Cl.⁴: **A 21 C 15/00,** A 21 B 7/00

(21) Anmeldenummer: **82100701.0**

(22) Anmeldetag: **02.02.82**

(54) **Anlage zum Herstellen von Backwerk.**

(30) Priorität: **04.02.81 DE 3103664**

(43) Veröffentlichungstag der Anmeldung:
**11.08.82 Patentblatt 82/32**

(45) Bekanntmachung des Hinweises auf die Patenterteilung:
**20.03.85 Patentblatt 85/12**

(84) Benannte Vertragsstaaten:
**BE FR GB NL**

(56) Entgegenhaltungen:
**FR - A - 2 081 809**
**GB - A - 284 240**
**GB - A - 697 071**
**GB - A - 2 048 756**
**US - A - 2 696 793**
**US - A - 2 910 017**

(73) Patentinhaber: **Hecrona Bäckereimaschinen GmbH,**
**Kalanderstrasse 19, D-4150 Krefeld (DE)**

(72) Erfinder: **Lassmann, Heribert, Erlenweg 53,**
**D-4152 Kempen (DE)**

(74) Vertreter: **Stark, Walter, Dr.-Ing., Moerser Strasse 140,**
**D-4150 Krefeld (DE)**

## Beschreibung

Die Erfindung betrifft eine Anlage zum Herstellen von Backwerken mit einseitigem Belag aus Fruchtauszügen und darauf aufgetragener Deckschicht, insbesondere von Biscuits mit Belag aus Konfitüre und Deckschicht aus Glasur, mit wenigstens einem Förderer, der die gebackenen Biscuits aus ber Backzone zu einer Station für das Auftragen der Konfitüre und weiter zum Glasieren transportiert.

Bei derartigem Backwerk, insbesondere Biscuits, ist es wesentlich, dass der Belag aus Fruchtauszügen bzw. Konfitüre auf der Unterseite der Biscuits angeordnet wird, d.h. auf derjenigen Seite, die während des Backvorganges auf dem Backblech oder dergleichen aufliegt. Dadurch bleibt die gleichmässig gebräunte Oberseite zugleich Sichtseite, während die Unterseite durch den Belag aus Konfitüre und die darüberliegende Deckschicht aus Glasur abgedeckt ist.

Im Zuge der Herstellung werden die gebackenen Biscuits gewendet, so dass die ursprünglich auf dem Backblech aufliegende Unterseite nunmehr oben liegt. Darauf wird dann der Belag aus Konfitüre und anschliessend die Deckschicht aus Glasur aufgebracht. Das ist in mehrfacher Hinsicht nachteilig und erfordert eine Reihe komplizierter Steuermassnahmen oder auch den Einsatz zusätzlicher Geräte im Rahmen einer gattungsgemässen Anlage, weil die noch beim Backen vorhandene Ordnung der Biscuits gestört wird und ein problemfreies Auftragen des Belages und der Deckschicht nur dann möglich ist, wenn eine einmal vorgegebene Ordnung der Biscuits während des gesamten Herstellungsvorganges eingehalten wird.

Aus der GB-A-2 048 756 ist es bekannt, einen Belag dadurch auf die Unterseite eines Biscuits aufzubringen, dass der Biscuit mit seiner Unterseite auf einer in einem Portionsnapf gehaltenen Menge des Belages aufgedrückt wird. Es bleibt offen, wie der Biscuit weiterzubehandeln ist, wenn auf den Belag noch eine Deckschicht aufgetragen werden soll.

Aus der GB-A-248 240 ist es bekannt, Biscuits zum Aufbringen einer Glasur durch ein Glasurbad zu führen. Ein zusätzlicher Belag ist nicht vorgesehen.

Der Erfindung liegt die Aufgabe zugrunde, eine Anlage der eingangs beschriebenen Gattung anzugeben, mit der es bei weitgehend automatischem Betrieb möglich ist, unter Aufrechterhaltung einer vorgegebenen Ordnung der Biscuits den Belag und die Deckschicht auf diese maschinell aufzubringen.

Diese Aufgabe wird dadurch gelöst, dass der aus der Backzone kommende Förderer oberhalb der Station für das Auftragen des Belags endet, dass unter dem Fördererende ein Transportband mit einer Vielzahl von Portionsnäpfen für die Konfitürenportionen angeordnet ist, auf denen der Förderer die Biscuits mit ihrer Unterseite ablegt, dass am Ende des Transportbandes ein die Biscuits von oben erfassender Vakuum-Übersetzer angeordnet ist, der die Biscuits einem anschliessenden Siebband übergibt, welches durch ein Glasurbad führt und dessen Ende als Wendestation ausgebildet und dazu oberhalb eines Austragbandes angeordnet ist.

Diese Anlage ermöglicht eine automatische Herstellung von Backwerken mit einseitigem Belag aus Fruchtauszügen und darauf aufgetragener Deckschicht, ohne dass es eines manuellen Eingriffs bedarf. Wesentlich dabei ist, dass die räumliche Anordnung der Biscuits während der ganzen Behandlungsdauer unverändert bleibt, d.h. die Oberseite bleibt Oberseite und die Unterseite bleibt Unterseite, so wie die Biscuits aus dem Backofen kommen. Diese räumliche Anordnung bleibt selbst dann erhalten, wenn die Biscuits auf ihrer Unterseite mit dem Belag aus Fruchtauszug versehen sind, der seinerseits sehr empfindlich ist. Dieser empfindliche Belag wird aber nicht beschädigt, weil er mit dem Biscuit aus den Portionsnäpfen des Transportbandes herausgehoben und auf dem Siebband abgelegt wird. Weil dabei mit einem Vakuum-Übersetzer gearbeitet wird, der lediglich die freie Oberseite der Biscuits beaufschlagt, bleibt der empfindliche Belag auf der Unterseite frei von mechanischen Beanspruchungen. Erst wenn dieser Belag durch eine Deckschicht bzw. Glasurschicht abgedeckt worden ist, werden die Biscuits um 180 Grad gewendet und dann einer weiteren Behandlung zugeführt.

Zweckmässig ist es, wenn in Transportrichtung hinter der Übergabestelle vom Förderer auf das Transportband über dem Transportband eine Andruckwalze angeordnet ist. Diese Andruckwalze stellt sicher, dass die vom Förderer auf das Transportband mit den Konfitüreportionen abgelegten Biscuits so gegen die Konfitüre gedrückt werden, dass eine Haftung entsteht.

In manchen Fällen kann es zweckmässig sein, wenn die Portionsnäpfe oder wenigstens ihre Böden elastisch verformbar sind, um das Herauslösen der Konfitüreportionen aus den Portionsnäpfen zu erleichtern.

Wird hinter der Übergabestelle vom Förderer auf das Transportband ein Kühlkanal angeordnet, den das Transportband durchläuft, dann werden die Konfitüreportionen durch Kühlung in einen Gelierzustand gebracht, der sicherstellt, dass sie bei der weiteren Behandlung Form und Gestalt behalten.

Ferner kann im Bereich der Übergabe vom Transportband auf das Siebband eine Einrichtung zum Aufwölben der Böden der Portionsnäpfe vorgesehen sein, so dass die Konfitüreportionen und damit die darüberliegenden Biscuits vor oder beim Übergang auf das Siebband automatisch aus den Portionsnäpfen angehoben werden.

Die Biscuits werden vom Siebband durch das Glasurbad geführt, wobei die Tauchtiefe des Siebbandes im Glasurbad im wesentlichen der Dicke des Belages aus Konfitüre entsprechen sollte.

Das Ende des Siebbandes ist als Wendestation ausgebildet und oberhalb eines Austragbandes angeordnet. Es versteht sich, dass die Höhe des Siebbandes über dem Austragband so eingerichtet ist, dass die weitgehend komplettierten Biscuits über das Ende des Siebbandes gleichsam abkippen und mit ihrer bisherigen Oberseite auf das Austragband fallen, mit dem sie durch einen in Transportrichtung hinter der Wendestation angeordneten Kühlkanal befördert werden, in welchem die Glasur aushärtet. Dann sind die Biscuits verpackungsfähig.

Im folgenden wird ein in der Zeichnung dargestelltes Ausführungsbeispiel der Erfindung erläutert.

Es zeigen:

Figuren 1a bis 1c jeweils in schematischer Darstellung Teilabschnitte einer Anlage zum Herstellen von Biscuits mit Belag aus Konfitüre und Deckschicht aus Glasur,

Figur 2 in vergrösserter Darstellung teilweise einen Längsschnitt durch ein Transportband.

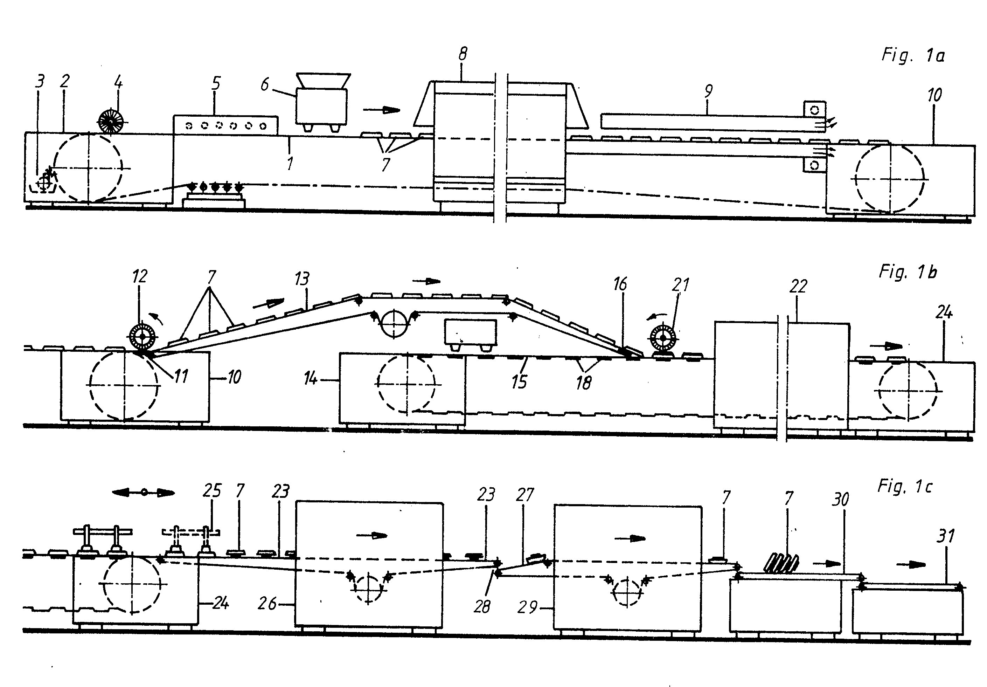

Die einzelnen Abschnitte der in Fig. 1 dargestellten Anlage schliessen unmittelbar aneinander an, sie sind lediglich aus Gründen der zeichnerischen Darstellung untereinander wiedergegeben. Die Transportrichtung verläuft in den Figuren 1a bis 1c jeweils von links nach rechts, wie u.a. durch Pfeile angedeutet.

Die Anlage besteht zunächst aus einem umlaufenden Backblech 1, das im linken Teil der Fig. 1a über eine Spannstation 2 geführt ist. Im Bereich der Spannstation befindet sich ein Bandöler 3 und eine Spiralbürste 4. Auf das mit einer elektrischen Heizung 5 vorgeheizte Backblech 1 werden dann mit einer Spritzmaschine 6 quer zur Längsrichtung des Backbleches 1 angeordnete Reihen von Plätzchen 7 aus Teig aufgesetzt. Die Plätzchen 7 werden mit dem Backblech 1 durch einen Ofen 8 und anschliessend durch eine Kühlbahn 9 mit Gebläsekühlung zu einer Übergabe im Bereich einer Antriebsstation 10 für das Backblech 1 befördert.

Die Übergabe ist ein an das Backblech 1 anschliessendes festes Blech 11, über dem eine weiche Segment-Andruckwalze 12 angeordnet ist, die die gebackenen Plätzchen bzw. Biscuits vom Blech 11 auf ein am Ende dieses Bleches 11 beginnendes Förderband 13 schiebt. Dabei wird weder die räumliche Orientierung der gebackenen Plätzchen 7 noch ihre geometrische Zuordnung zueinander verändert, so dass die Plätzchen 7 mit derselben Seite auf dem Förderband 13 aufliegen, mit dem sie auch auf dem Backblech 1 auflagen.

Das Förderband 13 transportiert die Plätzchen 7 beim dargestellten Ausführungsbeispiel zunächst schräg nach oben bis über eine Spannstation 14 eines weiterführenden Transportbandes 15, welches in gleicher Richtung und mit gleicher Geschwindigkeit umläuft wie das Förderband 13. Anschliessend bringt das Förderband 13 die Plätzchen 7 bis unmittelbar über das Transportband 15. Dort ist das Förderband 13 über ein Messer 16 geführt, welches im spitzen Winkel zum Transportband 15 angeordnet ist.

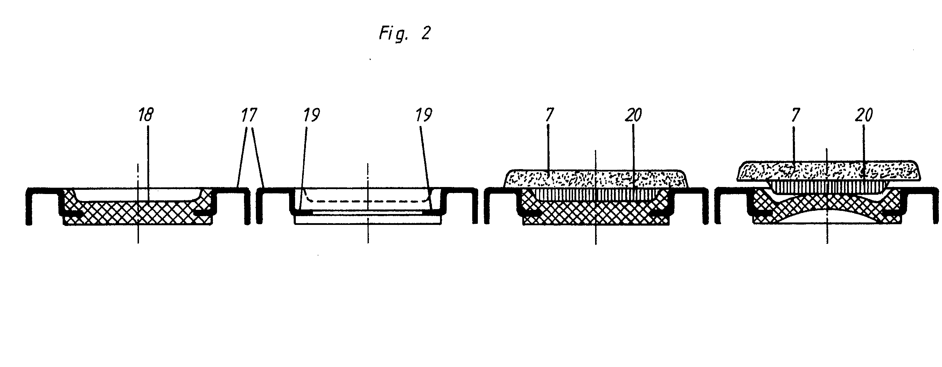

Das Transportband 15 ist beim dargestellten Ausführungsbeispiel als Kettenband aus miteinander gelenkig verbundenen Trägerplatten 17 ausgebildet, wobei jede Trägerplatte 17 zur Aufnahme einer Reihe von Portionsnäpfen 18 eingerichtet ist (Fig. 2). Die Portionsnäpfe 18 sind an Halterungen 19 der Trägerplatten 17 befestigt und bestehen aus einem dauerhaften, physiologisch unbedenklichen Material. Im einzelnen ist die Anordnung so getroffen, dass die Halterungen 19 den Zugang zum Boden der Portionsnäpfe 18 freilassen, so dass mit einer geeigneten Einrichtung der Boden jedes Portionsnapfes 18 nach oben gewölbt werden kann, wie das auf der rechten Seite der Fig. 2 dargestellt ist.

In Transportrichtung hinter der Spannstation 14 befindet sich oberhalb des Transportbandes eine Spritzmaschine, mit der die Portionsnäpfe 18 mit entsprechenden Portionen 20 einer geeigneten Konfitüre gefüllt werden. Die Konfitüre befindet sich in einem haftfähigen Zustand, so dass die am Ende des Förderbandes 13 von diesem auf dem Transportband 15 über zugeordneten Portionsnäpfen 18 abgelegten Plätzchen an der Konfitüre haften. Um die Haftung zu verbessern, ist im Anschluss an die Übergabestelle eine weiche Andruckwalze 21 oberhalb des Transportbandes angeordnet, die die Plätzchen 7 zusätzlich gegen die Konfitüre drückt.

Die so gebildete Einheit aus Plätzchen 7 und Konfitüreportion 20 wird dann auf dem Transportband 15 durch einen Kühlkanal 22 transportiert, in dem die Konfitüre durch Abkühlung in einen Gelierzustand überführt wird, der es ermöglicht, die mit dem Konfitürebelag versehenen Plätzchem vom Transportband ohne Beschädigung und ohne Formänderung abzunehmen.

Die Abnahme bzw. Übergabe auf ein nachgeschaltetes Siebband 23 erfolgt im Bereich einer Antriebsstation 24 für das Transportband 15, wobei im Bereich der Antriebsstation ggf. auch eine nicht dargestellte Einrichtung vorhanden ist, die den Boden jedes Portionsnapfes 18 in der in Fig. 2 rechts dargestellten Weise nach oben wölbt und dadurch das Plätzchen 7 mit dem Konfitürebelag 20 anhebt.

Jedenfalls befindet sich im Bereich der Antriebsstation 24 oberhalb des Transportbandes 15 ein Vakuum-Übersetzer 25, der die Reihen von Plätzchen 7 von oben erfasst und sie auf dem nachgeschalteten Siebband 23 absetzt. Mit dem Siebband 23 gelangen die derart vorbereiteten Plätzchen in ein Glasurbad 26, wobei die Tauchtiefe des Siebbandes 23 im Glasurbad 26 im wesentlichen der Dicke des Konfitürenbelages 20 entspricht. Dadurch wird nur die Unterseite der Plätzchen 7 und der jeweilige Konfitürenbelag 20 mit Glasur bedeckt.

Das Siebband 23 erstreckt sich über das Glasurbad 26 hinaus und endet über einem Austragband 27. Die Höhe des Siebbandes 23 über dem Austragband 27 ist so eingerichtet, dass die unterseitig mit Glasur versehen Plätzchen praktisch über das Ende des Siebbandes 23 mit einer Drehung um 180 Grad auf das Auftragband 27 kippen und von diesem mitgenommen werden. Damit ist eine Wendestation 28 verwirklicht und die Plätzchen 7 liegen nunmehr auf ihrer bisherigen Oberseite. In dieser Lage werden die Plätzchen 7 vom Austragband 27 durch einen Kühlkanal 29 befördert, in welchem die Glasur aushärtet. Anschliessend werden die Plätzchen 7 einem nachgeschalteten Förderer 30 unter gleichzeitiger Schichtung in Schräglage übergeben. Dieser Förderer 30 bringt die Plätzchen 7 zu einem Packtisch 31, damit sie in üblicher Weise verpackt werden können.

Es versteht sich, dass bei der dargestellten Anlage die Antriebe für die verschiedenen Bänder mit Regeleinrichtungen für den Gleichlauf ausgerüstet sind, so dass die Transportgeschwindigkeit der Plätzchen 7 stets gleich bleibt. Andere, nicht dargestellte Steuer- oder Regeleinrichtungen mit zugeordneten Messeinrichtungen können vorgesehen sein.

## Patentansprüche

1. Anlage zum Herstellen von Backwerken mit einseitigem Belag aus Fruchtauszügen und darauf aufgetragener Deckschicht, insbesondere von Biscuits mit Belag aus Konfitüre und Deckschicht aus Glasur, mit wenigstens einem Förderer (1), der die gebackenen Biscuits (7) aus der Backzone zu einer Station für das Auftragen der Konfitüre und weiter zum Glasieren transportiert, dadurch gekennzeichnet, dass der aus der Backzone kommende Förderer (13) oberhalb der Station für das Auftragen des Belags (20) endet, dass unter dem Fördererende ein Transportband (15) mit einer Vielzahl von Portionsnäpfen (18) für die Konfitürenportionen (20) angeordnet ist, auf denen der Förderer (13) die Biscuits (7) mit ihrer Unterseite ablegt, dass am Ende des Transportbandes (15) ein die Biscuits (7) von oben erfassender Vakuum-Übersetzer (25) angeordnet ist, der die Biscuits (7) einem anschliessenden Siebband (23) übergibt, welches durch ein Glasurbad (26) führt und dessen Ende als Wendestation (28) ausgebildet und dazu oberhalb eines Austragbandes (27) angeordnet ist.

2. Anlage nach Anspruch 1, dadurch gekennzeichnet, dass in Transportrichtung hinter der Übergabestelle vom Förderer (13) auf das Transportband (15) über dem Transportband (15) eine Andruckwalze (21) angeordnet ist.

3. Anlage nach Anspruch 1, dadurch gekennzeichnet, dass die Portionsnäpfe (18) oder wenigstens ihre Böden elastisch verformbar sind.

4. Anlage nach einem der Ansprüche 1 - 3, gekennzeichnet durch einen hinter der Übergabestelle vom Förderer (13) auf das Transportband (15) angeordneten Kühlkanal (22), den das Transportband (15) durchläuft.

5. Anlage nach einem der Ansprüche 1 - 4, gekennzeichnet durch eine im Bereich der Übergabe vom Transportband (15) auf das Siebband (13) angeordnete Einrichtung zum Aufwölben der Böden der Portionsnäpfe.

6. Anlage nach einem der Ansprüche 1 - 5, dadurch gekennzeichnet, dass die Tauchtiefe des Siebbandes (23) im Glasurbad (26) im wesentlichen der Dicke des Belages (20) aus Konfitüre entspricht.

7. Anlage nach einem der Ansprüche 1 - 6, dadurch gekennzeichnet, dass in Transportrichtung hinter der Wendestation (28) ein Kühlkanal (29) angeordnet ist, den das Austragband (27) durchläuft.

## Claims

1. Apparatus for making pastries with a layer of fruit extracts on one side and a coating applied thereon, in particular for biscuits with a layer of jam and a glazed coating, comprising at least one conveyor (1), which transports the baked biscuits (7) from the backing area to a station for the jam to be applied, and then to be glazed, characterised in that the conveyor (13) leaving the baking area ends above the station where the layer (20) is applied, in that disposed below the end of the conveyor is a conveyor belt (15) with a plurality of metering cups for the portions of jam, on which the conveyor (13) deposits the biscuits on their underside, in that a vacuum transfer device (25) which grips the biscuits from above is disposed at the end of the conveyor belt (15), which transfers the biscuits to a connecting endless-belt screen, which travels through a glanzing bath (26), the end of which is designed as a turn-over station (28) and is for this purpose disposed abode a discharge belt (27).

2. Apparatus according to claim 1, characterised in that a pressure roller (21) is disposed above the conveyor belt (15), upstream of the transfer point from the conveyor (13) to the conveyor belt (15) in the direction of travel.

3. Apparatus according to claim 1, characterised in that the metering cups (18) or at least their bases are resiliently deformable.

4. Apparatus according to one of claims 1 - 3, characterised by a cooling channel (22) disposed upstream of the conveyor transfer point, through which the conveyor belt passes.

5. Apparatus according to one of claims 1 - 4, characterised by a device for arching the bases of the metering cups, disposed in the transfer area from the conveyor belt (15) to the endless belt screen (13).

6. Apparatus according to one of claims 1 - 5, characterised in that the immersion depth of the endless-belt screen (23) in the glazing bath (26) is substantially equal to the thickness of the layer of jam.

7. Apparatus according to one of claims 1 - 6, characterised in that a cooling channel (29) is disposed, in the direction of travel, upstream of the turn-over station, through which the discharge belt runs.

## Revendications

1. Installation pour la fabrication de produits de pâtisserie présentant un revêtement unilatéral d'extraits de fruits et une couche de recouvrement appliquée dessus, en particulier de biscuits avec revêtement de confiture et couche de recouvrement de glaçure, comportant au moins un transporteur (1) qui transporte les biscuits cuits (7) de la zone de cuisson à un poste destiné à l'application de la confiture et ensuite au glaçage, installation caractérisée en ce que le transporteur (13) venant de la zone de cuisson se termine au-dessus du poste d'application du revêtement (20), qu'en dessous de l'extrémité du transporteur est disposée une courroie transporteuse (15) présentant de multiples godets de portion (18) pour les portions de confiture (20), sur lesquels le transporteur (13) dépose les biscuits par leur face inférieure, qu'à l'extrémité de la courroie transporteuse (15) est disposé un convertisseur à vide (25) qui saisit les biscuits par le haut et qui transfère les biscuits (7) sur une bande de tamis (23) faisant suite, qui passe à travers un bain de glaçure (26) et dont l'extrémité est conçue sous forme de poste de retournement (28) et est disposée à cet effet au-dessus d'une courroie d'extraction (27).

2. Installation selon la revendication 1, caractérisée en ce qu'à la suite du poste de transfert du transporteur (13) sur la courroie transporteuse (15), dans le sens de transport, un rouleau presseur (21) est disposé au-dessus de la courroie transporteuse (15).

3. Installation selon la revendication 1, caractérisée en ce que les godets de portion (18), ou au moins leur fonds, sont déformables élastiquement.

4. Installation selon l'une des revendications 1 à 3, caractérisée par un circuit de refroidissement (22), disposé à la suite du point de transfert du transporteur (13) à la courroie transporteuse (15) et que la courroie transporteuse (15) traverse.

5. Installation selon l'une des revendications 1 à 4, caractérisée par un dispositif servant à faire bomber le fond des godets de portion, disposé dans la région du transfert de la courroie transporteuse (15) sur la bande de tamis (23).

6. Installation selon l'une des revendications 1 à 5, caractérisée en ce que la profondeur d'immersion de la bande de tamis (23) dans le bain de glaçure (26) correspond pratiquement à l'épaisseur du revêtement (20) de confiture.

7. Installation selon l'une des revendications 1 à 6, caractérisée en ce qu'à la suite du poste de retournement (28), dans le sens de transport, est disposé un conduit de refroidissement (29) que la courroie d'extraction (27) traverse.

Fig. 1a

Fig. 1b

Fig. 1c

0 057 458

Fig. 2

18   17   19   19   7   20   7   20

0 057 458

9